# EUROPEAN PATENT SPECIFICATION

(11) **EP 3 118 142 B1**
(45) Date of publication and mention of the grant of the patent: **29.04.2020**
(21) Application number: 15761032.0
(22) Date of filing: 10.03.2015
(51) Int. Cl.: B65F 3/02, B65F 1/12

(54) **CONTAINER DOOR OPENING AND CLOSING METHOD AND SYSTEM**
VERFAHREN UND SYSTEM ZUM SCHLIESSEN UND ÖFFNEN EINER BEHÄLTERTÜR
SYSTÈME ET PROCÉDÉ D'OUVERTURE ET DE FERMETURE DE PORTES DE CONTENANTS

(30) Priority: 14.03.2014 ES 201400351
(43) Date of publication of application: 18.01.2017
(73) Proprietor: Explin Iris, SL, 08340 Vilassar De Mar (Barcelona) (ES)
(72) Inventor: SÁNCHEZ ESPIN, José Francisco, 08340 Vilassar De Mar (ES); FERNANDEZ CELA, Miguel Angel, 08970 Sant Joan Despí (ES)
(74) Representative: Juncosa Miró, Jaime
(86) International application number: PCT/ES2015/000030
(87) International publication number: WO 2015/136127

(56) References cited:
- EP-A2- 0 911 293
- DE-C1- 4 441 551
- ES-A1- 2 362 848
- ES-A1- 2 397 999
- ES-T3- 2 228 704

## Description

### Field of the Art

The present invention relates to a container door opening and closing system according to the preamble of claim 1 and to a container door opening and closing method according to claim 6.

### State of the Art

Container door opening and closing systems for unloading the content of containers into a collection vehicle are known.

For example, document DE 29905551 U1 describes a system for collecting containers and for emptying them into a vehicle, which includes a lifting arm with a gripping head suitable for being coupled to a handle provided in a container, and a container door opening or closing actuator suitable for being coupled to and moving an opening or closing head that is integrated in the handle thereby actuating the opening or closing of the doors of the container. In this patent document, the opening or closing actuator performs an axial vertical movement, having to travel a long distance for actuate the doors properly, this involves a very high gripping head that is not very compact.

Another additional drawback of this patent document is that the handle is not gripped by active gripping means, but rather by means of a fixed fork configuration located in the gripping head that must be laterally fitted to the handle, which complicates the gripping and release operations.

Documents that anticipate the partial winding of cables forming part of the container door opening or closing mechanism around a channel located on the periphery of a rotary disk are also known, such as the case of document ES2397999, but in this case, the rotary disk is integrated inside each container, increasing its cost, and furthermore the mentioned disk is in a horizontal position, rotating about a vertical axis, such that the actuator mechanism integrated in the gripping head of the lifting arm requires rotational actuation of the mentioned vertical axis of the rotary disk.

Document FR2970470A1 also integrates inside the container a mechanism consisting of channels located around disk segments vertically located around horizontal axes. Said disks segments are actuated by means of a mechanism consisting of levers converting an axial vertical movement into rotational actuation of the disk segments. This solution must be repeated in each container of the system, which increases the cost and the overall complexity, and requires an actuator integrated in the gripping head which performs an axial vertical movement.

Patent document DE4441551C1 describes a gripping head suitable for being coupled to a handle provided in a container, said gripping head including jaws mounted on a vertically displaceable carriage for the vertical drive of the opening and closing heat of the container. This document discloses a system comprising all the features of the preamble of claim 1.

### Brief Description of the Invention

According to a first aspect, the present invention is about a container opening and closing system as defined in claim 1.

The proposed system is for opening and closing the doors of containers each provided with at least one handle securely attached to the container in its upper half and configured for supporting the weight of the fully loaded container and with doors in its lower half actuable by an opening and closing mechanism mechanically attached to the doors and to an opening and closing head which has at least one projection and is integrated in the handle.

It is envisaged that the handle or handles can be coupled to the gripping head, such that the lifting arm can lift the container, the weight of said container and of its load being supported by the handle and by its attachment with the gripping head.

Said handle integrates an opening or closing head which is mechanically attached to the doors of the container by means of an opening or closing mechanism forming a flexible kinematic chain which allows transmitting an axial movement of said opening or closing head to the doors. By way of non-limiting example, said opening or closing mechanism will be formed by a system of chains and cables attached at their upper end to the opening or closing head, and at their lower end to the doors, such that if the opening or closing head pulled vertically upwards, the mentioned system of chains and cables will be tightened and the doors will be kept closed, and the doors will be opened in the opposite case. An alternative opening or closing mechanism keeping the doors open when the opening or closing head pulled upwards and closed when said tightening is released is also contemplated.

According to the invention, the opening and closing actuator has an interference member complementary to the projection and rotatable around a horizontal axis in a circular trajectory on a vertical plane, said interference member, movable by the actuating means in the circular trajectory, interferes with said projection when the gripping head is in the gripping position and drives and moves the opening and closing head and with it the opening and closing mechanism in said circular trajectory thereby controlling the opening and closing of the doors.

In one embodiment, the opening and closing actuator is a circular plate including a channel arranged on a periphery of said circular plate, the channel being parallel to the circular trajectory around the horizontal axis, said channel being provided for housing a fraction of a system of chains or cables of the opening and closing mechanism, said system of chains or cables being driven together with the opening and closing head due to the movement of the interference member, the size and position of the channel is provided so that the point of tangency between the vertical and said channel coincides with the vertical of the handle when the gripping head is in the gripping position. Hereby it is assured that the traction of the system of chains and cables forming the opening or closing mechanism is always applied vertically, although the trajectory of the movement is circular.

This configuration allows considerably reducing the height of the opening and closing actuator, and therefore the height of the gripping head, which means that the lifting arm will not have to be lifted as much in order to place a gripped container above the collection vehicle.

The gripping head may have a rotating mechanism allowing it to rotate with respect to a vertical axis, thereby being able to change the angular position of the lifted container to make unloading easier.

A load cell may be included in said gripping head. Said load cell allows detecting changes in the load held by said gripping head, thereby being able to deduce problems, such as the contact between the lifted container and an obstacle when transferring the container, and for checking the correct and complete emptying of the container, or checking if the load in the container is too much for being lifted by the lifting arm, the distance of the vehicle on which it is located. It also allows knowing the amount of waste contained in each container, and the total amount of waste collected by a collection vehicle.

There can be one or more of said load cell to allow a more accurate record and prevent deviations due to the container moving or swaying during handling. This system also allows including automatic safety mechanisms to stop the automated movement of the system, in the case of detecting by means of said load cells that a person or object is in the trajectory of the container with the risk of being crushed by the container.

The mentioned opening or closing actuator is activated by actuating means, and the lifting arm is also activated by actuating means. Said actuating means can be any one of the following, or other equivalent means, as will be obvious to a person skilled in the art: motor, servomotor, solenoid, electromagnet, linear motor, piston, etc.

Some of the actuating means also allow for an electric, pneumatic or hydraulic actuation. It is understood that said actuating means require an external power source and can be electrically or electronically controlled, for example, by means of a system of remote controls or switches, or by means of a printed circuit, a computer, or another electronic device. The actuating means can include sensors providing information for the correct electric or electronic control and operation safety.

The gripping head and the handle can be coupled by means of gripping means which can be any one of the following, or other equivalent means, as will be obvious to a person skilled in the art:
a configuration consisting of a clip or clamp, a lug with retractable tabs, a nut, a retractable pin, a fork, etc.

According to a second aspect, the present invention is about a method according to claim 6 for opening and closing the doors of containers with the system described above, the method including:
gripping said at least one handle arranged in the upper half of a container with the gripping head;
activating the opening and closing actuator integrated in the gripping head to move the interference member by the actuating means; and
interfering the projection of the opening and closing head with the interference member and driving the opening and closing head with the interference member causing the opening or closing of said doors.

It will be understood that references to geometrical positions, such as for example, parallel, perpendicular, tangent, vertical, horizontal, etc., allow deviations of up to ±5° with respect to the theoretical position defined by said nomenclature.

Other features of the invention will become apparent based on the following detailed description of an embodiment.

### Brief Description of the Drawings

The foregoing and other advantages and features will be better understood based on the following detailed description of an embodiment in reference to the attached drawings which must be interpreted in an illustrative and non-limiting manner, in which:
Figure 1 shows an axonometric view of a portion of a lifting arm provided with a gripping head at its distal end, and a container in which the opening or closing mechanism housed therein is shown in a discontinuous line;
Figure 2 shows a section of said gripping head along a vertical plane perpendicular to the circular trajectory of the interference member;
Figure 3 shows a section of said gripping head along a vertical plane coplanar with the channel following the circular trajectory of the interference member;
Figure 4 shows a vertical section of the handle, the opening or closing head and the projection, that are attached to an upper portion of a container;
Figure 5 shows the same view as Figures 3 and 4 with said opening or closing head being introduced through an opening existing on the lower face of the gripping head, both being coupled to one another;
Figure 6 shows the same view as Figure 5 with the gripping position being completed in which the gripping means have been operated for attaching the handle to the gripping head and thereby allowing the lifting of the container; a first step of the circular movement of the interference member in which it comes into in contact with the projection is also shown;
Figure 7 shows the same view as Figure 6 with the drive of the opening or closing head being initiated by the geometric interference between the interference member and the projection which have rotated, causing the actuation of the opening or closing mechanism;
Figure 8 shows the same view as Figure 7 with the circular movement of the interference member being completed and the interference member being located in the maximum drive position.

### Detailed Description of an Embodiment

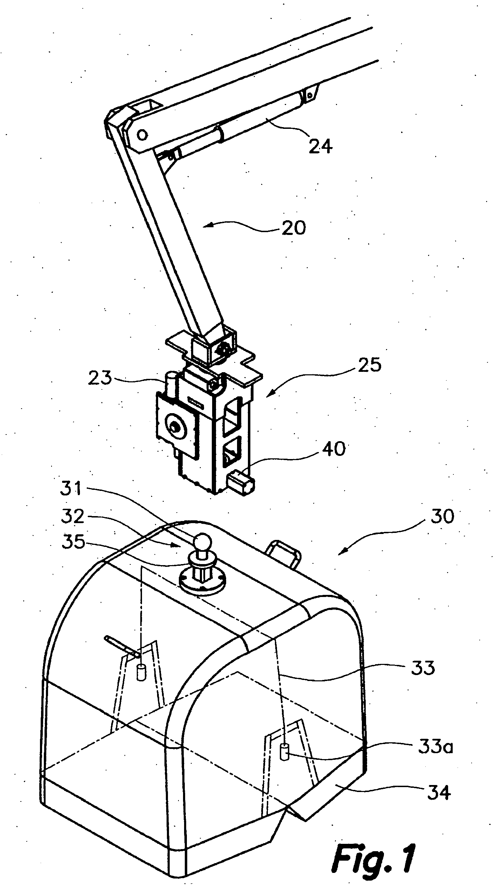

Figure 1 shows a container 30 provided with two doors 34 articulated at the lower half or lower face thereof, and with a handle 35 securely attached and arranged in the upper half of said container 30, preferably in the center of the upper face of said container 30. According to a preferred, non-limiting embodiment, said handle 35 is formed by a segment having a hollow tubular neck going through said upper face vertically and finishing with a flange at its upper end.

An opening or closing mechanism 33 formed, for example, by a system of chains and cables, joins the doors 34 and an opening or closing head 32 inserted in said hollow neck of the handle 35 to one another and transmits forces between them.

According to a preferred embodiment, the opening or closing mechanism 33 is made up of vertical bars adjacent to the side faces of the container 30 on the inner face thereof, articulated with the doors 34 at their lower end and with a crosspiece at their upper end, and of a cable going through said crosspiece and has a counterweight 33a also performing the function of a stop.

The cable is attached to the opening or closing head 32, such that when said head is being operated, the cable is tightened until the counterweight 33a abuts with the crosspiece, and drives the bars which actuate the doors, keeping them closed when lifting the container.

In the opposite case, as the actuation on the opening or closing head 32 diminishes, the cable comes loose, and the doors 34 open by gravity, driving the bars.

If the container is arranged on the ground preventing the opening of the doors 34, the position of the bars and the crosspiece does not change as the actuation of the opening or closing head 32 diminishes, but the counterweight 33a moves downwards by gravity, being separated from the crosspiece, which allows maintaining a certain tightness in the cable, which assures the correct collection thereof.

The same Figure 1 shows a lifting arm 20 activated by actuating means 24, which can be manually or automatically controlled to precisely position a gripping head 25 arranged at the distal end of said lifting arm 20 for coupling thereof with the handle 35 of the container. Said actuating means are preferably hydraulic actuating means.

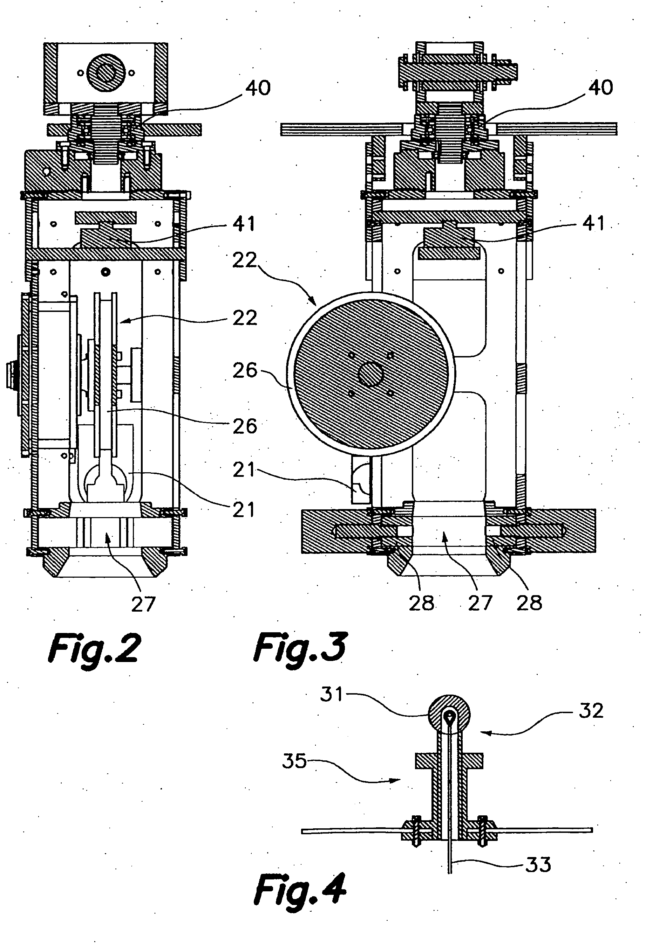

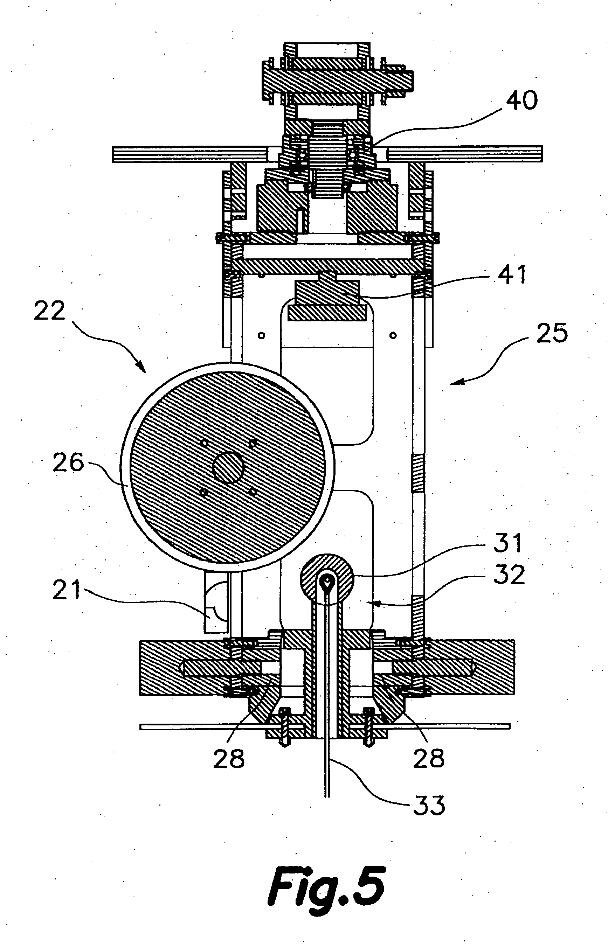

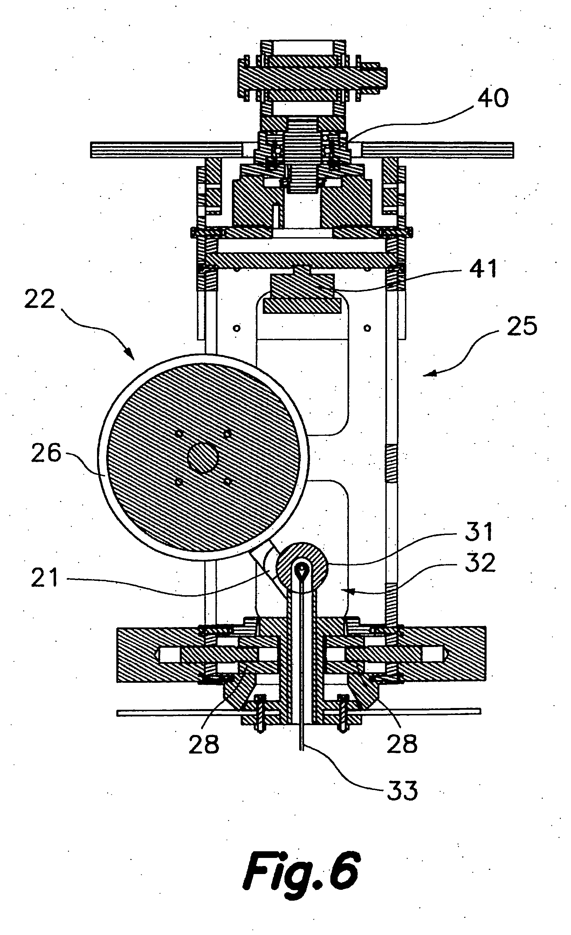

By way of example, said gripping head 25 has a cavity with an opening 27 on its lower face, sufficient for introducing the handle 35 therethrough, shown in Figures 2 and 3. Once the gripping means 28, for example, clips operated by a hydraulic actuator 40, have been introduced in the manner shown in Figure 5, they hold the handle 35 by its neck, which is know per se, and allow a secure attachment between both to allow safely lifting the container 30 (Figure 6). In this gripping position, the gripping head 25 described above would receive the opening or closing head 32 therein.

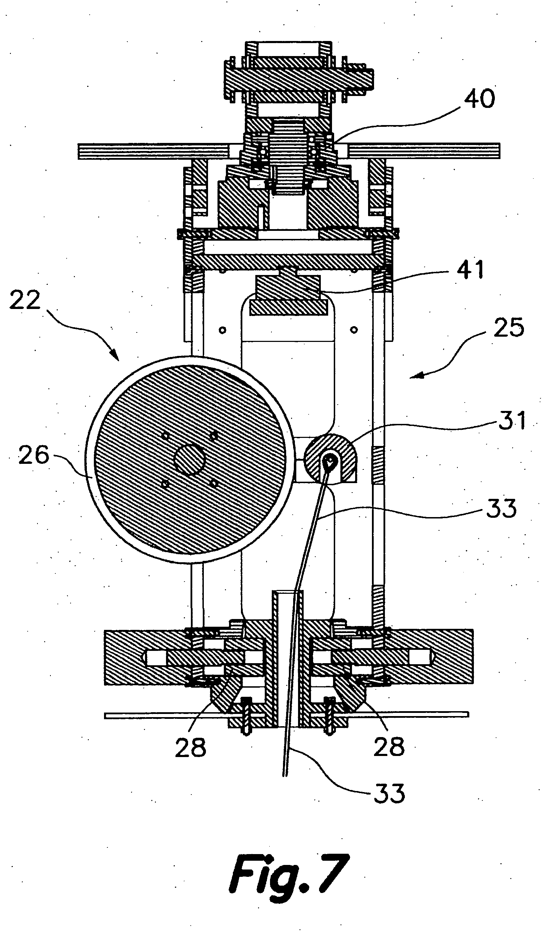

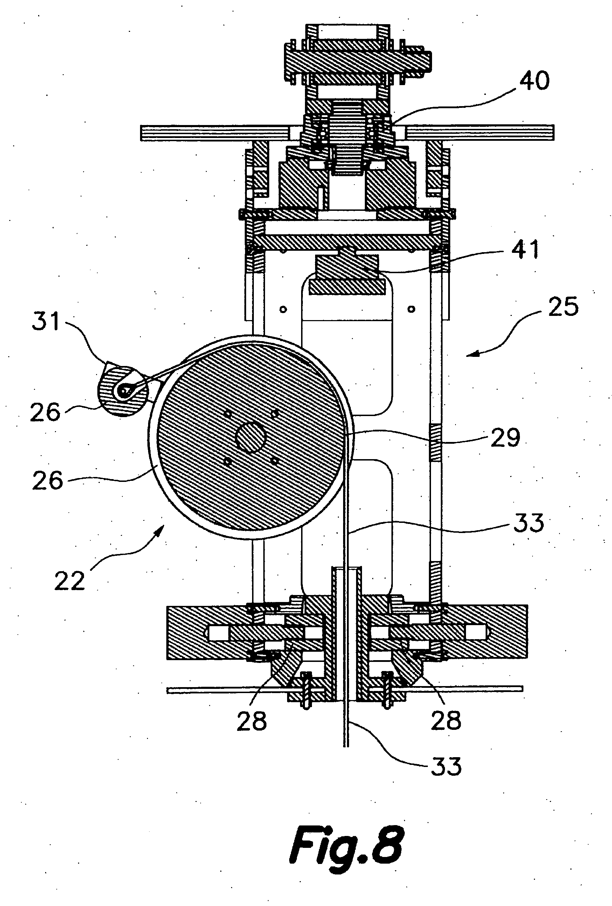

The mentioned gripping head 25 also has an opening or closing actuator 22, which integrates an interference member 21 provided for being moved by actuating means 23, following a circular trajectory on a vertical plane around a horizontal axis. Said circular trajectory is envisaged such that the interference member 21, during its movement, interferes and comes into contact with the opening or closing head 32 when the gripping head 25 is attached to the handle 35, in the manner shown in Figure 6. This interference causes the interference member 21 to drive the opening or closing head 32, and, with it, the opening or closing mechanism 33, as seen in Figures 7 and 8, thereby controlling the opening and closing of the doors 34.

Said opening or closing head 32 has at its upper end at least one projection 31. The mentioned projection 31 is preferably at least partially a sphere or a spherical fraction, such that it has a radial symmetry to facilitate coupling to said interference member 21 indifferently from any direction.

The interference member 21 has a configuration complementary to the projection 31, such that it will have at least one concave surface. The interaction between the mentioned concave surface and the sphere or spherical cap of the projection 31 allows an optimum coupling regardless of the angle of attack at the moment of the interference, and also allows mutual rotation, keeping an optimum contact at all times, as the angle of attack gradually changes as the interference member 21 rotates about the axis of rotation.

Optionally, said interference member has spoon configuration and can be formed by two segments separated by a groove, allowing the segments to interfere with the projection, and the groove preventing interference with the body of the opening or closing head 32.

Since the opening or closing head 32 is driven by means of its projection 31, it will uncouple from the handle 35, and will in turn drive a fraction of the opening or closing mechanism 33, preferably formed by a cable or chain, out of the container, through the hollow neck of the handle 35. It is preferable to keep at least the fraction of the opening or closing mechanism 33 going through the handle 35 vertical, so there is provided a channel 26 arranged on the periphery of a circular plate, following the circular trajectory of the interference member 21, provided for housing the fraction of the opening or closing mechanism 33 that has been extracted from the container, following the circular trajectory. This channel 26 is positioned such that one of its points of tangency 29 with the vertical is located above the neck of the handle 35. As can be seen in Figure 8, when the opening or closing head 32 is in the maximum drive position, the segment of the opening or closing mechanism 33 which is extracted from the container through the mentioned neck of the handle 35 comes into contact with the channel 26 at said point of tangency 29, therefore being arranged in a loading position, supporting the weight of the doors 34 and the entire content of the container 30, without causing frictions between said extracted segment of the opening or closing mechanism 33 with the mentioned neck of the handle 35.

Figure 7 shows how in an intermediate drive step the segment of the extracted opening or closing mechanism 33 and said neck of the handle 35 do indeed come into contact, but in said intermediate step the opening or closing mechanism 33 does not support more weight than that of the counterweight 33a and or that of the doors 34, but in no way the weight of the content of the container, so that friction would not cause wear and tear on the mentioned opening or closing mechanism 33.

According to a preferred embodiment shown in Figures 2 to 8, the entire gripping head 25 can rotate with respect to a vertical axis as a result of a rotating mechanism 40 operated by a motor, which allows changing the angular position of the container.

Said gripping head 25 can preferably include at least one load cell 41 which allows knowing the weight and the load variations of the container. This sensor allows detecting the correct lifting of the container, the weight of its content, if the emptying thereof has been performed correctly, and during the operations of lowering the container, detecting if an obstacle interferes with the container before it reaches the ground, thereby being able to stop its movement, preventing accidents in which people, vehicles, or other elements are being crushed.

Three load cells will preferably be located with a triangular arrangement, which thereby allows obtaining a much more reliable and constant joint reading.

## Claims

1. A container door opening and closing system for opening and closing the doors of containers (30) each container (30) being provided with at least one handle (35) securely attached to the container (30) in its upper half and configured for supporting the weight of the fully loaded container (30) and with doors (34) in its lower half actuable by an opening and closing mechanism (33) mechanically attached to the doors (34) and to an opening and closing head (32) which has at least one projection (31) and is integrated in the handle (35), said system including:
a lifting arm (20) actuated by manually or automatically controlled actuating means (24);
a gripping head (25) arranged at the distal end of the lifting arm (20) and configured for being couplable to said handle (35) and for being securely attached thereto in a gripping position for lifting the container (30); and
an opening and closing actuator (22) activated by actuating means (23) and integrated in said gripping head (25), said opening and closing actuator (22) mechanically couplable to the opening and closing head (32) to move the opening and closing head (32) and to actuate the opening or closing of the doors (34) when the gripping head (25) is in the gripping position,
**characterized in that**:
the opening and closing actuator (22) has an interference member (21) complementary to the projection (31) and rotatable around a horizontal axis in a circular trajectory on a vertical plane, said interference member (21), movable by the actuating means (23) in the circular trajectory, interferes with said projection (31) when the gripping head (25) is in the gripping position and drives and moves the opening and closing head (32) and with it the opening and closing mechanism (33) in said circular trajectory, thereby controlling the opening and closing of the doors.

2. The system according to claim 1, **characterized in** the interference member (21) has at least one concave surface.

3. The system according to claim 2, **characterized in that** the concave surface is spoon-shaped.

4. The system according to claim 2 or 3, **characterized in that** the interference member (21) has two portions separated by a groove.

5. The system according to claim 1, **characterized in that** the opening and closing actuator (22) is a circular plate including a channel (26) arranged on a periphery of said circular plate, the channel (26) being parallel to the circular trajectory around the horizontal axis, said channel (26) being provided for housing a fraction of a system of chains or cables of the opening and closing mechanism (33), said system of chains or cables being driven together with the opening and closing head (32) due to the movement of the interference member (21), the size and position of the channel (26) is provided so that the point of tangency between the vertical and said channel (26) coincides with the vertical of the handle (35) when the gripping head (25) is in the gripping position.

6. A container door opening and closing method for opening and closing the doors of containers (30) with the system described in any of the preceding claims the method including:
gripping said at least one handle (35) arranged in the upper half of a container (30) with the gripping head (25);
activating the opening and closing actuator (22) integrated in the gripping head (25) to move the interference member (21) by the actuating means (23); and
interfering the projection (31) of the opening and closing head (32) with the interference member (21) and driving the opening and closing head (32) with the interference member (21) causing the opening or closing of said doors.

## Patentansprüche

1. System zum Öffnen und Schließen einer Behältertür, zum Öffnen und Schließen der Türen von Behältern (30), wobei jeder Behälter (30) mit mindestens einem Handgriff (35) versehen ist, welcher am Behälter (30) an dessen oberen Hälfte sicher befestigt ist und dazu ausgebildet ist, das Gewicht der vollbeladenen Behälter (30) zu stützen, und mit Türen (34) in dessen unteren Hälfte betätigt durch einen Öffnungs- und Schließmechanismus (33), welcher mechanisch an den Türen (34) und an einem Öffnungs- und Schließkopf (32), welcher mindestens einen Vorsprung (31) aufweist und in den Handgriff (35) integriert ist, befestigt ist, wobei das genannte System Folgendes beinhaltet:
einen Hebearm (20), welcher durch manuell oder automatisch gesteuerte Betätigungsmittel (24) betätigt wird;
einen Greifkopf (25), welcher am distalen Ende des Hebearms (20) angeordnet ist und dazu ausgebildet ist, in einer Greifstellung zum Heben des Behälters (30) mit dem genannten Handgriff (35) gekoppelt werden zu können und daran sicher befestigt zu werden; und
einen Öffnungs- und Schließaktuator (22), welcher durch Betätigungsmittel (23) aktiviert wird und in den genannten Greifkopf (25) integriert ist, wobei der genannte Öffnungs- und Schließaktuator (22) mit dem Öffnungs- und Schließkopf (32) mechanisch gekoppelt werden kann, um den Öffnungs- und Schließkopf (32) zu bewegen und das Öffnen und das Schließen der Türen (34) zu betätigen, wenn der Greifkopf (25) der Greifstellung ist,
**dadurch gekennzeichnet, dass**:
der Öffnungs- und Schließaktuator (22) ein Interferenzelement (21) aufweist, welches komplementär zum Vorsprung (31) ist und um eine Horizontalachse herum in einer kreisförmigen Bahn auf einer vertikalen Ebene rotierbar ist, wobei das genannte Interferenzelement (21), durch die Betätigungsmittel (23) in der kreisförmigen Bahn beweglich, mit dem genannten Vorsprung (31) interferiert, wenn der Greifkopf (25) in der Greifstellung ist und den Öffnungs- und Schließkopf (32), und damit den Öffnungs- und Schließmechanismus (33), in der genannten kreisförmigen Bahn antreibt und bewegt, wodurch das Öffnen und das Schließen der Türen gesteuert wird.

2. System nach Anspruch 1, **dadurch gekennzeichnet, dass** das Interferenzelement (21) mindestens eine konkave Oberfläche aufweist.

3. System nach Anspruch 2, **dadurch gekennzeichnet, dass** die konkave Oberfläche löffelförmig ist.

4. System nach Anspruch 2 oder 3, **dadurch gekennzeichnet, dass** das Interferenzelement (21) zwei durch eine Nut getrennte Teile aufweist.

5. System nach Anspruch 1, **dadurch gekennzeichnet, dass** der Öffnungs- und Schließaktuator (22) eine kreisförmige Platte ist, welche einen auf einem Umfang der genannten kreisförmigen Platte angeordneten Kanal (26) beinhaltet, wobei der Kanal (26) parallel zur kreisförmigen Bahn um die Horizontalachse herum ist, wobei der genannte Kanal (26) dazu vorgesehen ist, einen Bruchteil eines Systems aus Ketten oder Kabeln des Öffnungs- und Schließmechanismus (33) aufzunehmen, wobei das genannte System aus Ketten oder Kabeln zusammen mit dem Öffnungs- und Schließkopf (32) aufgrund von der Bewegung des Interferenzelements (21) angetrieben wird, wobei die Größe und die Stellung des Kanals (26) derart vorgesehen sind, dass der Tangentialpunkt zwischen der Vertikalen und dem genannten Kanal (26) mit der Vertikalen des Handgriffs (35) übereinstimmt, wenn der Greifkopf (25) in der Greifstellung ist.

6. Verfahren zum Öffnen und Schließen einer Behältertür, zum Öffnen und Schließen der Türen von Behältern (30) mit dem System, welches in jeder der vorhergehenden Ansprüche beschrieben wird, wobei das Verfahren Folgendes umfasst:
das Greifen des genannten mindestens einen Handgriffs (35), welcher in der oberen Hälfte eines Behälters (30) angeordnet ist, mit dem Greifkopf (25);
das Aktivieren des Öffnungs- und Schließaktuators (22), welcher in den Greifkopf (25) integriert ist, um das Interferenzelement (21) durch die Betätigungsmittel (23) zu bewegen; und
das Interferieren des Vorsprungs (31) des Öffnungs- und Schließkopfs (32) mit dem Interferenzelement (21) und das Antreiben des Öffnungs- und Schließkopfs (32) mit dem Interferenzelement (21), sodass das Öffnen oder das Schließen der genannten Türen bewirkt wird.

## Revendications

1. Un système pour ouvrir et fermer la porte d'un conteneur pour ouvrir et fermer les portes de conteneurs (30) chaque conteneur (30) étant pourvu d'au moins une poignée (35) fermement fixée sur le conteneur (30) sur sa moitié supérieure et configuré pour supporter le poids du conteneur complètement chargé (30) et ayant des portes (34) sur sa moitié inférieure actionnable par un mécanisme d'ouverture et de fermeture (33) mécaniquement fixé sur les portes (34) et sur une tête (32) d'ouverture et de fermeture qui possède au moins une saillie (31) et est intégrée dans la poignée (35), ce système comprenant :
un bras de levage (20) actionné par des moyens d'actionnement (24) contrôlés manuellement ou automatiquement ;
une tête de préhension (25) aménagée à une extrémité distale du bras de levage (20) et configurée pour être couplée à cette poignée (35) et pour y être fermement fixée dans une position de préhension pour élever le conteneur (30) ; et
un actionneur d'ouverture et de fermeture (22) actionné par des moyens d'actionnement (23) et intégré dans cette tête de préhension (25), cet actionneur d'ouverture et de fermeture (22) pouvant être mécaniquement couplé à la tête d'ouverture et de fermeture (32) pour déplacer la tête d'ouverture et de fermeture (32) et pour actionner l'ouverture ou la fermeture des portes (34) lorsque la tête de préhension (25) est dans la position de préhension,
**caractérisé en ce que** :
l'actionneur d'ouverture et de fermeture (22) possède un élément d'interférence (21) complémentaire à la saillie (31) et rotatif autour d'un axe horizontal dans une trajectoire circulaire sur un plan vertical,
cet élément d'interférence (21), pouvant être déplaçable par les moyens d'actionnement (23) dans la trajectoire circulaire, interfère avec cette saillie (31) lorsque la tête de préhension (25) se trouve dans la position de préhension et entraîne et déplace la tête d'ouverture et de fermeture (32) et avec le mécanisme d'ouverture et de fermeture (33) dans cette trajectoire circulaire en contrôlant ainsi l'ouverture et la fermeture des portes.

2. Le système conformément à la revendication 1, **caractérisé en ce que** l'élément d'interférence (21) possède au moins une surface concave.

3. Le système conformément à la revendication 2, **caractérisé en ce que** la surface concave a la forme d'une cuillère.

4. Le système conformément à la revendication 2 ou 3, **caractérisé en ce que** l'élément d'interférence (21) possède deux portions séparées par une rainure.

5. Le système conformément à la revendication 1, **caractérisé en ce que** l'actionneur d'ouverture et de fermeture (22) est une plaque circulaire comprenant un canal (26) aménagé sur une périphérie de cette plaque circulaire, le canal (26) étant parallèle à la trajectoire circulaire autour de l'axe horizontal, ce canal (26) étant prévu pour héberger une fraction d'un système de chaînes ou de câbles du mécanisme d'ouverture et de fermeture (33), ce système de chaînes ou de câbles étant entraîné ensemble avec la tête d'ouverture et de fermeture (32) à cause du mouvement de l'élément d'interférence (21), la taille et position du canal (26) sont prévus de sorte que le point de tangence entre la verticale et ce canal (26) coïncide avec la verticale de la poignée (35) lorsque la tête de préhension (25) se trouve dans la position de préhension.

6. Une méthode de fermeture et d'ouverture de porte d'un conteneur pour ouvrir et fermer les portes de conteneurs (30) ayant le système décrit dans une quelconque des revendications précédentes, la méthode comprenant :
saisir cette au moins une poignée (35) aménagée dans la moitié supérieure d'un conteneur (30) avec la tête de préhension (25) ;
activer l'actionneur d'ouverture et de fermeture (22) intégré dans la tête de préhension (25) pour déplacer l'élément d'interférence (21) par les moyens d'actionnement (23) ; et
interférer la saillie (31) de la tête d'ouverture et de fermeture (32) avec l'élément d'interférence (21) et entraîner la tête d'ouverture et de fermeture (32) avec l'élément d'interférence (21) en causant l'ouverture ou fermeture de ces portes.
